Europäisches Patentamt

European Patent Office

Office européen des brevets

(19)

(11) Publication number: **0 005 827**
**B1**

(12) **EUROPEAN PATENT SPECIFICATION**

(45) Date of publication of patent specification: **08.06.88**

(51) Int. Cl.⁴: **C 02 F 7/00, C 02 F 5/00**

(21) Application number: **79101648.8**

(22) Date of filing: **30.05.79**

(54) **Method of removing contaminants from water.**

(30) Priority: **30.05.78 US 910175**

(43) Date of publication of application:
**12.12.79 Bulletin 79/25**

(45) Publication of the grant of the patent:
**08.06.88 Bulletin 88/23**

(84) Designated Contracting States:
**BE DE FR GB IT NL SE**

(56) References cited:
**DE-A-1 517 714**
**US-A-4 028 427**

**CHEMICAL ABSTRACTS, Vol. 62, no. 5, March
1, 1965, abstract no. 5066c, COLUMBUS,
OHIO, USA; O. SCHIESSL: "Chlorinated phenols
in drinking and sewage waters"**

**CHEMICAL ABSTRACTS, Vol. 61, no. 13,
December 21, 1964, abstract no.
15834c, COLUMBUS, OHIO, USA; K. VEDE et al.:
"Contamination of drinking water with PCP"**

(73) Proprietor: **THE DOW CHEMICAL COMPANY
2030 Dow Center Abbott Road P.O. Box 1967
Midland, MI 48640 (US)**

(72) Inventor: **Robbins, Lanny Arnold
3900 Tittabawassee River Road
Midland Midland Michigan (US)**

(74) Representative: **Casalonga, Alain et al
BUREAU D.A. CASALONGA OFFICE JOSSE &
PETIT Morassistrasse 8
D-8000 München 5 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 005 827

**Description**

The present invention relates generally to water treatment, and more in particular to the removal of organic contaminants from water.

In the operation of many industrial processes, large quantities of effluent water are produced. Such water often contains organic materials dissolved therein as undesirable contaminants. Removal of these organic materials has posed a problem for industry, particularly when the objectionable organic materials have lower pure component vapor pressures and higher boiling points than water.

One approach to removing organic contaminants from water has been to vaporize and expel the volatile contaminants from the water by contacting the contaminants with a stripping vapor such as, for example, steam, natural gas, or air. Typical processes of the above types are taught, for example, in United States Patents 2,141,349; 2,527,444; 2,773,003; 2,927,075; 2,930,753; and by L. J. Thibodeaux in "Air Stripping of Organics from Wastewater: A Compendium", proc. 2nd Nat'l. Conf. on Complete WateReuse: Water's Interface with Energy, Air, and Solids, AIChE, N.Y. (1975).

Contaminants that can be removed by such conventional processes are generally limited to low molecular weight compounds having higher pure component vapor pressures at 25°C than water and lower normal boiling points than water (one atmosphere pressure). Such contaminants are known to be more volatile than water, and are expected from thermodynamic considerations to be readily desorbed into a stripping vapor.

A process employing air as the stripping vapor is discussed by Thibodeaux. Thibodeaux suggests that some organic contaminants which exhibit a lower pure component vapor pressure at 25°C than water and a higher normal boiling point than water can be vaporized into an air stream if the activity coefficient of the contaminant in water is sufficiently large. However, an examination of the vapor-liquid equilibria data presented by Thibodeaux at page 362 demonstrates that even with large activity coefficients, organic contaminants having a normal boiling point in excess of 181.4°C (Thibodeaux, Table 1), are not expected to be susceptible to vaporization by a stripping vapor due to their low relative volatilities.

However, in many applications, it is necessary to remove from water organic contaminants having lower pure component vapor pressures at 25°C than water and having normal boiling points in excess of 200°C. It is thus desirable to develop a simple process for removing such contaminants from water which is effective, energy efficient, and economically attractive.

Carbon bed adsorption was generally used for removing such type of contaminant and more particularly pentachlorophenol (PCP), see Chemical Abstracts, Vol. 61, No. 13, December 21, 1964 Abstract No. 15834C, Contamination of drinking water with PCP (pentachlorophenol). Analysis and removal. By K. Uede, et al.

A process for removing organic material from water contaminated therewith comprising passing a current of vapor, sufficient to vaporize at least a portion of said organic material, through a moving stream of said contaminated water and then separating vapor containing the organic material from the water to produce water having a reduced concentration of said organic material, said process being characterized in that:

a) the organic material is a chlorinated phenol, a phthalate ester, a phosphate ester, a phosphorothioester, a chlorinated benzene, a chlorinated biphenyl, a polynuclear aromatic compound, a chloroalkene, a chlorocycloalkene, a chloroether;

b) the organic material has a normal boiling point in excess of 200°C;

c) the organic material has a relative volatility with respect to water of at least about 4, said relative volatility being determined according to the following equation:

$$\alpha_{cw} = \frac{y_c/y_w}{x_c/x_w}$$

wherein $y_c$ and $y_w$ are the mole fractions of contaminant ($y_c$) and water ($y_w$) in vapor phase at equilibrium, the ratio being obtained at the vapor azeotrope, $x_c$ and $x_w$ are the mole fractions of contaminant ($x_c$) and water ($x_w$) in liquid phase at equilibrium, the ratio $x_c/x_w$ being based on the solubility of the contaminant in water;

d) the vapor is passed countercurrently through the said moving stream of contaminated water; and

e) the pH of the said contaminated water is adjusted to a level sufficient to prevent substantial dissociation of said organic material (more than 10 per cent) if it is capable of dissociation has now been discovered.

The present process has a number of advantages over conventional processes. First, the said organic contaminants having lower pure component vapor pressures at 25°C than water and higher normal boiling points than water are easily removed from water. Second, a low cost source of vapor, e.g., air, can be employed. Finally, contact between the aqueous phase being stripped and the medium used to absorb or adsorb the organic contaminant from the stripping vapor can be avoided.

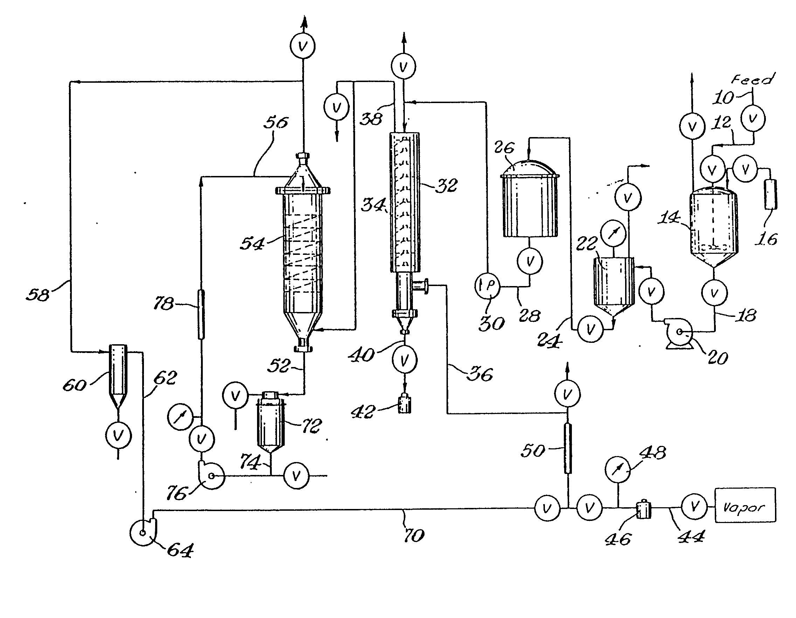

The single figure shown in the drawing is a schematic representation of one embodiment of a system useful in practicing the present process.

2

The water treated by the present process has generally been previously used in various chemical processing operations for purification or other purposes. When so used, the water becomes contaminated with dissolved products and by-products of the chemical process. The contaminants are generally dissolved in the water at, or below, their solubility limit.

Organic contaminants which can be removed from water by the present process have a normal boiling point (one atmosphere pressure) in excess of 200°C and a relative volatility with respect to water of at least about 4. The instant compounds are considered to have a normal boiling point of more than 200°C if their pure component vapor pressures are less than one atmosphere at 200°C. Preferably, the organic contaminants have a relative volatility with respect to water of at least about 100. Suitable organic materials include, for example, pesticides, such as aldrin, dieldrin, dichlorodiphenyltrichloroethane, heat transfer fluids, such as biphenyl, o-chlorobiphenyl, 2,2'-dichlorobiphenyl, trichlorobiphenyl, diphenyloxide, o-chlorodiphenyloxide; antimicrobials, such as pentachlorophenol; tetrachlorophenol, trichlorophenol, dichlorophenol; chlorobenzenes, such as 1,2,4-trichlorobenzene, 1,2,3,4-tetrachlorobenzene, 1,2,4,5-tetrachlorobenzene; mixtures of the above and the like. Additional compounds wherein the relative volatility was determined experimentally, include 2,4-dichlorophenol; hexachlorobutadiene; hexachlorocyclopentadiene; 2,4,6-trichlorophenol; 2,4,5-trichlorophenol; pentachlorophenol; 2,2'-dichlorobiphenyl; hexachlorobenzene; anthracene; di-n-octyl phthalate; pyrene; benzo(a)pyrene; O,O - diethyl - O - 3,5,6 - trichloro - 2 - pyridyl phosphorothioate and mixtures thereof with each other and with members of the aforementioned group.

Tests indicate that chlorinated benzenes, such as hexachlorobenzene; chlorinated phenols such as pentachlorophenol; chloroalkenes such as hexachlorobutadiene; chlorocycloalkenes such as hexachloro-cyclopentadiene; polynuclear aromatics such as anthracene and benzo(a) pyrene; phthalate esters such as di-n-octyl phthalate; chloro-ethers, phosphate and phosphorothioate esters such as O,O - diethyl - O,3,5,6 - trichloro - 2 - pyridyl phosphorothioate; chlorinated biphenyls such as 2,2'-dichlorobiphenyl; and mixtures thereof can be removed from water by the process of this invention.

Generally, the organic contaminants are present in the water in an amount of from 5 to 350 parts per billion (ppb). However, some processes may result in water containing more than 350 ppb of the organic contaminants. The removal of contaminants present in amounts in excess of 350 ppb is also within the scope of the present invention.

The relative volatility of an organic contaminant to water is defined by the thermodynamic derived equation:

$$\alpha_{cw} = \frac{Y_c/Y_w}{x_c/x_w}$$

wherein $Y_c$ and $Y_w$ are the mole fractions of contaminant ($Y_c$) and water ($Y_w$) in vapor phase at equilibrium, the ratio being obtained at the vapor azeotrope, $x_c$ and $x_w$ are the mole fractions of contaminant ($x_c$) and water ($x_w$) in liquid phase at equilibrium the ratio $x_c/x_w$ being based on the solubility of the contaminant in water.

The relative volatility of the contaminant to water is a general indication of the ease of removing the contaminant from the water. A relative volatility greater than unity indicates that the contaminant is more volatile than water and will therefore desorb. The greater the magnitude of the relative volatility, the more easily the contaminant can be volatilized.

The relative volatility of any contaminant with respect to water can be calculated by first determining the solubility of the contaminant in water at a given temperature. This solubility can be determined by methods well known in the art, such as, by a "cloud point determination". For example, the solubility of pentachlorophenol in water at 100°C had been determined to be 204 parts per million. Since the molecular weight of pentachlorophenol is 266.3, $x_c/x_w = (204 \times 10^{-6})18/266.3$.

The second step in calculating relative volatility involves determining the ratio of contaminant to water present in the vapor phase. This ratio may be obtained by methods well known in the art, such as by the use of azeotropic data. For example, the vapor pressure of solid pentachlorophenol at 100°C has been determined to be 0.1311 mbar (.0983 mm Hg). Since the vapor pressure of water at 100°C is known to be 1013 mbar (760 mm Hg), the ratio $y_c/y_w = 0.1311/1013$. Substitution of the values obtained for $x_c/x_w$ and $y_c/y_w$ into Equation 1, yields a relative volatility of about 9.4. The experimental determination of the relative volatility for pentachlorophenol shown in Table III verifies this result. Similar calculations can be made for other contaminants.

Other methods for estimating the relative volatility are available. See "Activity Coefficients and Molecular Structure: (Pierotti et al.); *Industrial and Engineering Chemistry*, Vol. 51, No. 1 (Jan, 1959), p. 95. This article gives a method for estimating activity coefficients in water of high molecular weight organic compounds. The relative volatility is determined by equation (1) where the activity coefficient of the compound in water is $Y_{cw}$, and the activity coefficient of water, $Y_{ww}$, is equal to one.

In removing contaminants, the pH of the water being treated must be adjusted to a level sufficient to prevent substantial dissociation of the organic contaminant contained therein if the organic contaminant is capable of dissociation. By substantial dissociation, it is meant that more than about 10 percent of the organic contaminant has ionized in aqueous solution. Preferably, the pH of the water being treated is maintained at a level sufficient to prevent more than about 1 percent of the organic contaminant from ionizing. Normally, when the organic contaminant is an acidic material, the pH of the water is maintained at a level lower than the $pK_a$ of the acidic material. For example, when pentachlorophenol is the contaminant, its $pK_a$ at 25°C is 4.8. Consequently, the pH of the water is maintained at less than 4.8, e.g., about 3.0. The pH can be controlled by introducing sufficient amounts of suitable mineral acids, such as, for example HCl, $H_2SO_4$, $HNO_3$, mixtures thereof, and the like. When the organic contaminant is a basic material, the pH of the water should be maintained at a level greater than the $pK_a$ of the basic material. The pH control can be accomplished by adding sufficient amounts of a suitable base, such as, for example, NaOH, KOH or mixtures thereof.

Many organic compounds do not appreciably dissociate in water. A wide range of pH levels are sufficient to prevent substantial dissociation of these compounds. Any of these pH's would be sufficient to prevent dissociation and therefore are considered within the scope of this invention.

The $pK_a$ can be determined by a simple test well known to those skilled in the art. Often such values are known and published in the literature. To determine the $pK_a$ when a published value is not available, one can refer to published test methods to determine the $pK_a$, for example, in *Archives of Biochemistry and Biophysics*, Vol. 54, pg. 55—71, G. E. Blackman, M. H. Parke, and G. Garton (1955).

Following any necessary pH adjustment, a current of vapor, sufficient to vaporize at least a portion of the organic material, is passed through a moving stream of the contaminated water.

Any vapor which is chemically nonreactive with both the water and the organic contaminant can be employed. The term "vapor" is meant to include any material that is in the vapor phase at the temperature of operation, including materials which are commonly gases at that temperature. Suitable vapors include, for example, carbon dioxide, carbon monoxide, helium, methane, nitrogen, oxygen, air, steam, mixtures thereof, and the like. In one embodiment, substantially only atmospheric air is used as the stripping vapor. In another embodiment, substantially only steam is used as the stripping vapor. The vapor used can contain water, it can be anhydrous, or it can be saturated with water vapor at the temperature of operation. In one embodiment, it is preferred that a vapor, such as air, be saturated with water vapor to avoid the necessity of expending energy to vaporize water to reach the saturation point of water in the air.

The volume ratio of vapor to water being treated should be as small as possible, in order to minimize equipment size. A vapor to water ratio of from 28.3 liter to about 42.5 kiloliter of vapor per 3.78 liters of water has been found to be satisfactory in most applications at 25°C. However, ratios in excess of 42.5 kiloliters/3.78 liters can be used if desired.

The vapor to water ratio for stripping contaminants from water has been found to be a function of the relative volatility of the contaminant to water. The larger the relative volatility, the less vapor that is required to effect separation. Consequently, organic contaminants with high relative volatilities are preferred in the practice of the process.

The vapor and water can be contacted in any suitable apparatus which insures effective contact between the vapor and the contaminated water. Contact of the vapor and the water is preferably accomplished in countercurrent flow so as to assure efficient operation and adequate contact between the liquid and the vapor. However, other forms of liquid-vapor contacting methods which are well known in the art may be utilized.

The vapor/water contacting is normally conducted at atmospheric pressure and at a temperature of from 5°C to about 100°C. For all vapor, with the obvious exception of steam, a temperature of from 15°C to 25°C is preferred for economic reasons. However, the process can be operated at other pressures and at temperatures from the freezing point of the contaminated water to about, or slightly above, the boiling point of the contaminated water, if desired.

Subsequent to its removal from the water stream, the organic material-containing vapor can be recovered from the stripping column and the organic material removed from the vapor. The removal can be effected by well-known techniques such as, for example, absorption, extractive distillation, adsorption, combustion, or condensation followed by phase separation. For example, when pentachlorophenol is removed from water by the use of air, the resulting pentachlorophenol-ladened air can be contacted in a liquid scrubber with a caustic stream, such as 1% by weight NaOH, to absorb the pentachlorophenol. When pentachlorophenol is removed from water by the use of steam, the resulting pentachlorophenol-ladened steam can be condensed, and the resulting pentachlorophenol fraction separated by filtration. Vapor (e.g., air) which has been depleted of organic contaminants can be recycled and again passed through a second body of contaminated water to strip the contaminant therefrom as described previously. Vapor which has been condensed (e.g., steam) and at least partially depleted of organic contaminants can be mixed with the initial contaminated water stream and again subjected to steam stripping.

The detailed operation of one embodiment of the present process, wherein the stripping vapor is air, is further described by referring to the drawing. In the illustrated embodiment, a stream of water contaminated with an organic contaminant, is introduced into the system through conduit 10. The contaminated water passes via conduit 12 into treatment tank 14 where the pH of the contaminated water can be adjusted by the addition of acidic or basic medium from tank 16. The contaminated water stream then passes via conduit 18 and pump 20 into filter 22, wherein solid pollutants are removed from the water stream. The filtered water is transferred via conduit 24 to feed storage tank 26. The contaminated water is then withdrawn from feed storage tank 26, and introduced via conduit 28 and pump 30 into the upper portion of stripping column 32.

The stripping column 32, contains a plurality of plates and downcomers 34 in the interior thereof. A current of vapor enters the lower portion of the stripping column 32 via conduit 36. The vapor is passed from a source into the system through conduit 44. Regulator 46, pressure indicator 48, and rotometer 50 measure and control the flow of vapor.

The contaminated water descends through column 32 and plates and downcomers 34 and is countercurrently contacted with the current of vapor. The stripping vapor and the organic contaminants vaporized therein are discharged from the upper portion of the column 32 via conduit 38. Water stripped of its contaminants is discharged from stripping column 32 through conduit 40 and optionally retained in vessel 42.

The stripping vapor and organic contaminants contained therein can be passed via conduit 38 into the lower portion of scrubber 54. Alternatively, if the stripping vapor is an easily condensable material, such as steam, the stripping vapor and organic contaminants contained therein can be passed via conduit 38 to a suitable condenser (not shown), instead of scrubber 54.

In scrubber 54, the vapor and contaminants contained therein ascend through suitable packing material, and are countercurrently contacted with a stream of caustic, or other material which preferentially absorbs the contaminant and removes it from the vapor. The caustic or other absorbent enters the upper portion of scrubber 54 via conduit 56.

Vapor that has passed through scrubber 54 or a suitable condenser is discharged via conduit 58 and optionally (in the case of air) recycled via conduit 58 to demister 60. Vapor from demister 60 is passed via conduit 62 to pump 64. Recycled vapor is then transported through conduit 70 and rejoins the incoming vapor at regulator 50.

A reservoir of caustic or other scrubbing material is contained in reservoir 72. This caustic or other absorbent is passed via conduit 74, pump 76, and meter 78 into the upper portion of the scrubber 54 via conduit 56. The at least partially spent absorbent is discharged from the scrubber 54 via conduit 52.

In an alternative embodiment, the scrubber 54 represents one of a number of alternative methods for removing the contaminant from the vapor. Scrubber 54 can represent a carbon bed adsorption apparatus, a condenser and phase separator, combustion apparatus, or extractive distillation apparatus.

The invention is further described by the following examples:

Examples 1—21

Using an apparatus substantially identical to that described in the drawing, a waste water stream containing pentachlorophenol was treated by the present process. A 100 millimeter (mm) outside diameter Oldershaw column was employed as the stripping column. The Oldershaw column contained 10 sieve plates and downcomers. A 10,16 cm inside diameter column, 91,44 cm in length and packed with 45,72 cm of 6,35 mm Berl saddles was employed as the caustic scrubber.

The waste water stream was contaminated with 240 parts per billion of pentachlorophenol. The water was acidified by the addition of sulfuric acid until a pH of about two was achieved and then fed near the top of the stripping column at a flow rate of about one pound per hour.

Dry atmospheric air was introduced near the bottom of the column at a rate of 67,97 l/mn and was vented from the top of the column.

The pentachlorophenol in the effluent water or bottoms was reduced from 240 ppb to 2.4 ppb for a 99% removal. The volume of stripping air as well as weight of stripped water was measured and is shown in Table I, Example 1.

Examples 2—9

Water was treated substantially as described in Example 1. However, the air exiting from the top of the stripper was conducted to a scrubber and passed upwardly through the caustic scrubber where it was contacted with a countercurrent flow of a one percent by weight sodium hydroxide solution. Air exiting the caustic scrubber was recirculated to the stripper column in a completely enclosed vapor circuit. The air entering the stripper was recirculated and scrubbed (Rec/Scrubbed). Various operational parameters were varied as indicated in Table I, Examples 2—9.

Examples 10—15

Water was treated substantially as described in Example 1. However, the air entering the stripping column was saturated with water vapor (air/sat'd $H_2O$). This prevents cooling of the air and water by evaporation. Various operational parameters were varied as indicated in Table I, Examples 10—15.

Examples 16—21

Water was treated substantially as described in Example 1. The various operational parameters were varied as indicated in Table I, Examples 16—21.

### TABLE I
Contaminant: Pentachlorophenol; B.P. 309°C

| Example No. | Water kg/h | Air l/min | Stripping air | ppb Contaminant | | |
|---|---|---|---|---|---|---|
| | | | | Feed | Bottoms | % Removal |
| 1 | 0.45 | 68.0 | Dry/Ambient | 240 | 2.4 | 99.0 |
| 2 | 0.45 | 68.0 | Recycled/Scrubbed | 240 | 3.5 | 98.5 |
| 3 | 0.45 | 68.0 | " | 240 | 1.0 | 99.6 |
| 4 | 0.45 | 51.8 | " | 240 | 12.0 | 95.0 |
| 5 | 0.45 | 51.8 | " | 240 | 12.0 | 95.0 |
| 6 | 0.45 | 32.0 | " | 240 | 20.0 | 91.7 |
| 7 | 0.45 | 32.0 | " | 240 | 22.0 | 90.8 |
| 8 | 0.29 | 41.0 | " | 8700 | 130 | 98.5 |
| 9 | 0.45 | 69.2 | " | 8700 | 600 | 93.1 |
| 10 | 1.81 | 84.9 | Saturated w/water | 246 | 89 | 63.8 |
| 11 | 1.81 | 84.9 | " | 246 | 118 | 52.0 |
| 12 | 0.91 | 42.5 | " | 246 | 65 | 73.6 |
| 13 | 0.91 | 42.5 | " | 246 | 96 | 60.9 |
| 14 | 0.45 | 42.5 | " | 246 | 12 | 95.1 |
| 15 | 0.45 | 42.5 | " | 246 | 21 | 91.5 |
| 16 | 1.79 | 84.8 | Dry/Ambient | 210 | 104 | 50.5 |
| 17 | 1.79 | 84.8 | " | 210 | 136 | 35.2 |
| 18 | 0.98 | 42.7 | " | 210 | 168 | 20.0 |
| 19 | 0.98 | 42.7 | " | 210 | 163 | 22.3 |
| 20 | 0.45 | 42.7 | " | 210 | 153 | 27.1 |
| 21 | 0.45 | 42.7 | " | 210 | 146 | 30.4 |

Examples 22—27

Using apparatus similar to that described in the drawing, water containing 220 ppb pentachlorophenol was treated by the present process. The feed was acidified with mineral acid to a pH of 2.15 prior to stripping. In this example and the others reported in Table II, the stripping vapor was steam.

The equipment consisted of a two gallon still pot, a two inch diameter, twenty-five plate, glass Oldershaw column, a feed preheater, a water cooled overhead condenser and bottoms and overhead receivers.

The feed water was preheated to approximately 90 degrees Celsius, and fed to the top of the stripping column. The water then flowed down through the stripping column and into the still pot. The still pot was heated to generate steam which rose through the column countercurrently to the water, stripped the organic compound and then was condensed by the condenser into the overhead receiver. The boil up rate listed in the table is the percentage of the water feed stream that is taken as condensate into the overhead receiver. The remaining bottoms or stripped water stream was withdrawn from the still pot into the bottoms receiver and analyzed for the organic contaminant.

The contaminants removed and the operational parameters are shown in Table II, Examples 22—27.

Example 28a—d

A process effluent stream containing a mixture of chlorophenols was stripped by a procedure similar to that in Examples 22—27. The feed was acidified to a pH of two and filtered prior to stripping. The results and process parameters are shown in Table II. The bottoms and overhead concentrations shown are averages of three separate runs.

Examples 29 and 30

Waters containing diphenyl oxide and trichlorobenzene were stripped by a process similar to that described in Example 22. The parameters of the process are indicated in Table II.

TABLE II

| Example No. | Contaminant | B.P.°C | Feed rate kg/h | Overhead % of feed | ppb Contaminant | | | |
|---|---|---|---|---|---|---|---|---|
| | | | | | Feed | Bottoms | Overhead | % Removed |
| 22 | Pentachlorophenol | 309 | 4.53 | 9.9 | 220 | 9.0 | 2,165 | 95.9 |
| 23 | " | " | 4.53 | 10.5 | 220 | 9.3 | 2,200 | 95.8 |
| 24 | " | " | 4.53 | 11.0 | 220 | 6.8 | 2,075 | 96.9 |
| 25 | " | " | 4.53 | 23.0 | 220 | 1.3 | 1,040 | 99.4 |
| 26 | " | " | 4.45 | 21.0 | 220 | 1.2 | 990 | 99.5 |
| 27 | " | " | 4.53 | 23.0 | 220 | 1.2 | 990 | 99.5 |
| 28a | Dichlorophenols | 210/220 | 4.53 | 20.0 | 46,500 | <1000 | 226,700 | >97.8 |
| 28b | Trichlorophenols | 246/252 | 4.53 | 20.0 | 3,820 | 19.5 | 16,500 | 99.5 |
| 28c | Tetrachlorophenols | 275 | 4.53 | 20.0 | 2,280 | 49.5 | 7,420 | 97.8 |
| 28d | Pentachlorophenol | 309 | 4.53 | 20.0 | 2,040 | 27.2 | 7,200 | 98.7 |
| 29 | Diphenyloxide | 259 | 4.53 | 10.0 | 4,700 | <20 | — | >99.6 |
| 30 | Trichlorobenzene | 213 | 4.53 | 10.0 | 480 | 0.17 | — | 99.9 |

Lab tests Nos. 1—15

These tests demonstrate a quick and easy batch differential distillation method for obtaining the relative volatility (α) for compounds for which a published value is not available. In these examples, the relative volatility is experimentally determined for 14 compounds. The results, i.e. that the relative volatility is greater than one, indicate that each compound may be stripped from water according to the practice of the present invention.

The organic compound to be tested is dissolved in water to a concentration less than its solubility limit. The solution (FEED) is then slowly heated at atmospheric pressure to boiling in a flask. Heating is continued until approximately one percent of the feed is evaporated. The vapor is conducted from the flask to a condenser and receiver. The vapor line is heated to prevent any condensation of the vapor before it reaches the condenser. After the approximately one percent is vaporized, the heat is removed and the water remaining in the flask (BOTTOMS) and the condensed vapor (OVERHEAD) are analyzed for the organic compound.

The relative volatility (α) can be calculated from the concentrations found using the following equation which gives the relation of relative volatility to measured concentrations in batch differential distillation experiments such as the one described above.

$$\alpha = \frac{\ln\left(1 + \dfrac{V}{L} \dfrac{y_i}{x_i}\right)}{\ln\left(1 + \dfrac{V}{L} \dfrac{y_w}{x_w}\right)} \tag{2}$$

Where:

α=relative volatility of impurity to water.
V=moles of vapor to overhead condensate.
L=moles of liquid remaining in bottoms.
$y_i$=mole fraction of impurity in overhead.
$x_i$=mole fraction of impurity in bottoms.
$y_w$=mole fraction of water in overhead.
$x_w$=mole fraction of water in bottoms.

Note that the relative volatility is a function of the concentration of the impurity in the bottoms and overhead. Therefore, the discrepancy in weight recovery of the impurity is not significant.

9

TABLE III

| Test No. | Compound | B.P.°C | pH | ppb Compound | | | Recovery | α |
|---|---|---|---|---|---|---|---|---|
| | | | | Feed | Bottoms | Overhead | | |
| 1 | 2,4-Dichlorophenol | 209 | 5.8 | 570,000 | 460,000 | 5,160,000 | 89 | 10.7 |
| 2 | Hexachlorobutadiene | 214 | N/A | 222 | 56 | 4,195 | 46 | 54 |
| 3 | Hexachlorocyclo-pentadiene | 234 | N/A | 160 | 35 | 4,720 | 53 | 84 |
| 4 | 2,4,6-Trichlorophenol | 246 | 4.1 | 123,000 | 83,000 | 1,215,000 | 77 | 13.8 |
| 5 | 2,4,5-Trichlorophenol | 252 | 5.0 | 134,000 | 106,000 | 1,245,000 | 87 | 11.2 |
| 6 | Pentachlorophenol | 309 | 3.0 | 1,230 | 950 | 9,340 | 84 | 9.4 |
| 7 | 2,2'-Dichlorobiphenyl | 317 | N/A | 57 | 18 | 1,230 | 55 | 51 |
| 8 | Hexachlorobenzene | 326 | N/A | 0.7 | 0.1 | 25.6 | 60 | 118 |
| 9 | Anthracene | 342 | N/A | 4.44 | 1.35 | 105 | 60 | 57 |
| 10 | Di-n-octyl phthalate | 385 | N/A | 5,000 | 1,690 | 50,710 | 45 | 26 |
| 11 | Pyrene | 404 | N/A | 13 | 6.6 | 184 | 77 | 24 |
| 12 | Benzo (a) pyrene | 495 | N/A | .28 | .23 | 1.35 | 97 | 5.7 |
| 13 | O,O-Diethyl O-3,5,6-tri-chloro-2-pyridyl phos-phorothioate | * | N/A | 13 | 4.2 | 290 | 55 | 54 |

\* The vapor pressure of this compound is less than one atmosphere at 200°C.
N/A=Not available.

# 0 005 827

**Claims**

1. Process for removing organic material from water contaminated therewith comprising passing a current of vapor, sufficient to vaporize at least a portion of said organic material, through a moving stream of said contaminated water and then separating vapor containing the organic material from the water to produce water having a reduced concentration of said organic material, said process being characterized in that:

(a) the organic material is a chlorinated phenol, a phthalate ester, a phosphate ester, a phosphorothioester, a chlorinated benzene, a chlorinated biphenyl, a polynuclear aromatic compound, a chloroalkene, a chlorocycloalkene, a chloroether;

(b) the organic material has a normal boiling point in excess of 200°C;

(c) the organic material has a relative volatility with respect to water of at least about 4, said relative volatility being determined according to the following equation:

$$\alpha_{cw} = \frac{y_c/y_w}{x_c/x_w}$$

wherein $y_c$ and $y_w$ are the mole fractions of contaminant ($y_c$) and water ($y_w$) in vapor phase at equilibrium the ratio being obtained at the vapor azeotrope, $x_c$ and $x_w$ are the mole fractions of contaminant ($x_c$) and water ($x_w$) in liquid phase at equilibrium, the ratio $x_c/x_w$ being based on the solubility of the contaminant in water;

(d) the vapor is passed countercurrently through the said moving stream of contaminated water and

(e) the pH of the said contaminated water being adjusted to a level sufficient to prevent substantial dissociation of said organic material (more than 10 per cent) if it is capable of dissociation.

2. Process according to claim 1, wherein the vapor is methane, nitrogen, steam, air or a mixture thereof.

3. Process according to claim 1 or 2 characterized in that the contacting is conducted at a temperature of from 5°C to 100°C.

4. Process according to any one of claims 1 to 3 characterized in that the contaminated water is contacted with vapor in a ratio of from 28.3 liter to about 42.5 kilo liter of vapor per 3.78 liter of water.

5. Process according to any one of claims 1 to 4 characterized in that it includes the additional steps of recovering the organic material-containing vapor and removing said organic material from said vapor.

6. A process in accordance with claim 1 for removing pentachlorophenol from water contaminated therewith characterized in that sufficient mineral acid is added to said contaminated water stream to maintain a pH of less than about 3.

7. The process of claim 6 including the additional step of: contacting said pentachlorophenol containing vapor with an absorbent to preferentially remove said pentachlorophenol.

**Patentansprüche**

1. Verfahren zur Beseitigung von organischem Material aus Wasser, das damit verunreinigt ist, umfassend Durchleiten eines Dampfstroms, der genügt, um mindestens einen Teil des organischen Materials zu verdampfen, durch einen bewegten Strom des verunreinigten Wassers und dann Abtrennen von Dampf, der das organische Material enthält, von dem Wasser, um Wasser zu erzeugen, das eine verringerte Konzentration des organischen Materials aufweist, dadurch gekennzeichnet, daß

a) das organische Material ein chloriertes Phenol, ein Phtalatester, ein Phosphatester, ein Phorphorthioester, ein chloriertes Benzol, ein chloriertes Biphenyl, eine polynukleare aromatische Verbindung, ein Chloralken, ein Chlorcycloalken, ein Chlorether ist;

b) das organische Material einen normalen Siedepunkt oberhalb von 200°C aufweist;

c) das organische Material eine relative Flüchtigkeit im Vergleich zu Wasser von mindestens ungefähr 4 hat, wobei die relative Flüchtigkeit durch die folgende Gleichung bestimmt wird:

$$\alpha_{cw} = \frac{y_c/y_w}{x_c/x_w}$$

wobei $y_c$ und $y_w$ die Molbrüche des Kontaminaten ($y_c$) und des Wassers ($y_w$) in Dampfphase im Gleichgewicht sind und das Verhältnis bei dem Dampfazeotrop erhalten wurde, $x_c$ und $x_w$ die Molbrüche des Kontaminanten ($x_c$) und des Wassers ($x_w$) in Flüssigphase beim Gleichgewicht sind, wobei das Verhältnis $x_c/x_w$ auf der Löslichkeit des Kontaminanten in Wasser basiert,

d) der Dampf im Gegenstrom durch den bewegten Strom des kontaminierten Wassers geleitet wird und

e) der pH des kontaminierten Wassers auf einen Wert eingestellt wird, der genügt, um eine wesentliche Dissoziation des organischen Materials (mehr als 10%) zu verhindern, falls dieses zur Dissoziation fähig ist.

11

2. Verfahren nach Anspruch 1, worin der Dampf Methan, Stickstoff, Wasserdampf, Luft oder eine Mischung davon ist.

3. Verfahren nach Anspruch 1 oder 2, dadurch gekennzeichnet, daß das Kontaktieren bei einer Temperatur von 5°C bis 100°C durchgeführt wird.

4. Verfahren nach einem der Ansprüche 1 bis 3, dadurch gekennzeichnet, daß das kontaminierte Wasser mit Dampf in einem Verhältnis von 28,3 Liter bis ungefähr 42,5 Kiloliter Dampf pro 3,78 Liter Wasser in Kontakt gebracht wird.

5. Verfahren nach einem der Ansprüche 1 bis 4, dadurch gekennzeichnet, daß es die zusätzliche Schritte des Rückgewinnens des organisches Material enthaltenden Dampfes und des Entfernens des organischen Materials aus dem Dampf einschließt.

6. Verfahren nach Anspruch 1 zur Entfernung von Pentachlorphenol aus Wasser, das damit verunreinigt ist, dadurch gekennzeichnet, daß zu dem verunreinigten Wasserstrom genügend mineralische Säure zugegeben wird um einen pH von weniger als ungefähr 3 aufrechtzuerhalten.

7. Verfahren nach Anspruch 6 einschließlich des zusätzlichen Schrittes des Kontaktierens des Pentachlorphenol-haltigen Dampfes mit einem Absorbens um bevorzugt Pentachlorphenol zu entfernen.

## Revendications

1. Procédé de séparation de substances organiques d'avec de l'eau contaminée par ces substances, qui comporte le passage d'un courant de vapeur, suffisant pour vaporiser au moins une partie desdites substances organiques, au travers d'un flux circulant de ladite eau contaminée, et la séparation ultérieure de la vapeur contenant les substances organiques d'avec l'eau, pour produire de l'eau contenant une concentration réduite desdites substances organiques, ledit procédé étant caractérisé en ce que:

(a) les substances organiques sont un phénol chloré, un phtalate, un ester phosphate, un phosphorothioester, un benzène chloré, un biphényle chloré, un composé aromatique polynucléaire, un chloroalcène, un chlorocycloalcène, un chloroéther;

(b) les substances organiques ont un point d'ébullition normal dépassant 200°C;

(c) les substances organiques présentent une volatilité relative, par rapport à l'eau, d'au moins environ 4, cette volatilité relative étant déterminée selon l'équation suivante:

$$\alpha_{cw} = \frac{y_c/y_w}{x_c/x_w}$$

dans laquelle $y_c$ et $y_w$ sont les fractions molaires des produits contaminants ($y_c$) et de l'eau ($y_w$) dans la phase vapeur à l'équilibre, le rapport étant obtenu pour la vapeur de l'azéotrope, $x_c$ et $x_w$ sont les fractions molaires des produits contaminants ($x_c$) et de l'eau ($x_w$) dans la phase liquide à l'équilibre, le rapport $x_c/x_w$ étant basé sur la solubilité du produit contaminant dans l'eau;

(d) on fait passer la vapeur à contre-courant à travers ledit flux circulant d'eau contaminée, et

(e) le pH de ladite eau contaminée est ajusté à une valeur suffisante pour empêcher une dissociation importante (à plus de 10%) desdites substances organiques si celles-ci sont capables de se dissocier.

2. Procédé conforme à la revendication 1, dans lequel la vapeur est du méthane, de l'azote, de la vapeur d'eau, de l'air ou un de leurs mélanges.

3. Procédé conforme à l'une des revendications 1 et 2, caractérisé en ce que l'on effectue la mise en contact à une température comprise entre 5 et 100°C.

4. Procédé conforme à l'une quelconque des revendications 1 à 3, caractérisé en ce que l'eau contaminée est mise en contact avec la vapeur selon un rapport de 28,3 litres à environ 42 500 litres de vapeur pour 3,78 litres d'eau.

5. Procédé conforme à l'une quelconque des revendications 1 à 4, caractérisé en ce qu'il comporte les étapes supplémentaires de récupération de la vapeur contenant les substances organiques et de séparation desdites substances organiques d'avec ladite vapeur.

6. Procédé conforme à la revendication 1, pour la séparation du pentachlorophénol d'avec de l'eau contaminée par celui-ci, caractérisé en ce que l'on ajoute audit flux d'eau contaminée suffisamment d'acide minéral pour maintenir le pH à une valeur inférieure à environ 3.

7. Procédé conforme à la revendication 6, qui comporte l'étape supplémentaire de mise de la vapeur contenant ledit pentachlorophénol en contact avec un absorbant, pour séparer préférentiellement ledit pentachlorophénol.